# EUROPEAN PATENT APPLICATION

(11) **EP 3 878 774 A1**
(43) Date of publication of application: **15.09.2021**
(21) Application number: 20161746.1
(22) Date of filing: 09.03.2020
(51) Int. Cl.: B65G 1/06, B65G 43/08

(54) **SHUTTLE FOR DELIVERING AND RETRIEVING GOODS, A STORAGE SYSTEM COMPRISING SUCH SHUTTLE AND A METHOD ASSOCIATED THEREWITH**

(71) Applicant: AJ Produkter AB, 301 82 Halmstad (SE)
(72) Inventor: Åsén, John, 285 37 Markaryd (SE)
(74) Representative: Hansson Thyresson AB

(57) **Abstract**

A shuttle (16) for delivering and retrieving goods to and from a storage position in a rack storage system is provided. The shuttle (16) comprises a motor for driving the shuttle (16), at least one vertically displaceable goods supporting platform (21), and at least one load cell arranged below the at least one goods supporting platform (21) such that the at least one goods supporting platform rests on the at least one load cell. The at least one load cell is configured to register the weight of goods arranged on said platform (21), and the shuttle (16) is configured to adapt its velocity in accordance with the registered weight.

## Description

### TECHNICAL FIELD

The present invention relates to a shuttle for delivering and retrieving goods to and from a storage position in a rack storage system, a rack storage system comprising such shuttle, and a method for retrieving goods from a storage position in a rack storage system.

### BACKGROUND

Different types of shuttles for transporting goods on pallets to and from a storage position in pallet racking systems are known in the prior art. One such type of prior art shuttle comprises a chassis, a motor, a plurality of wheels, such as four wheels, and a vertically displaceable goods supporting platform, wherein the shuttle is autonomously movable on two parallel rails arranged in a horizontal plane below a row of storage positions. The goods supporting platform of the shuttle is set in a raised position for transporting a pallet with goods to the desired storage position in the rack, where the platform is lowered for positioning of the pallet on beams of the rack. Then, the shuttle is movable along the rails below the pallet in its lowered position.

In order for the shuttle to autonomously stop before the end of the rail, prior art shuttles are e.g. provided with sensors, e.g. photo sensors. The rails on which the shuttle operates is provided with markings, e.g. openings or holes, arranged to be detected by the sensor of the shuttle. The markings of the rail are provided on a distance from each end portion of the rail such that it is possible for the shuttle to brake and slow down its speed enough to stop before the rail ends.

It is important that the shuttle is able to stop completely before the rail ends, even if the shuttle is carrying its maximum load weight. Therefore, the braking force applied is adapted to the maximum load weight of the shuttle. In order for the shuttle to stop completely before the end of the rail, the braking force is adapted to slow down the speed of the shuttle to the minimum speed with maximum braking force directly when the sensors recognise the markings in the rail.

A problem with this large braking force of the shuttle is that it leads to longer driving times. Since time is a valuable factor in a storage system, there is always a need for improving time utilization of the storage system and of the shuttles thereof.

From the above it is understood that there is room for improvements and the invention aims to solve or at least mitigate the above and other problems.

### SUMMARY

An object of the present invention is to provide a new type of storage system shuttle which is improved over prior art and which eliminates or at least mitigates the drawbacks discussed above. More specifically, an object of the invention is to provide a shuttle that provides efficient goods handling with shortened driving times. These objects are achieved by the technique set forth in the appended independent claims with preferred embodiments defined in the dependent claims related thereto.

In a first aspect, a shuttle for delivering and retrieving goods to and from a storage position in a rack storage system is provided. The shuttle comprises a motor for driving said shuttle, at least one vertically displaceable goods supporting platform, and at least one load cell arranged below the at least one goods supporting platform such that the at least one goods supporting platform rests on the at least one load cell. The at least one load cell is configured to register the weight of goods arranged on said platform, and the shuttle is configured to adapt its velocity in accordance with the registered weight.

This shuttle is advantageous in that it is configured to control the speed according to the weight of the goods loaded thereon. Since both the acceleration and the deceleration of the shuttle is adapted to the actual weight of the loaded goods, instead of being adapted to the maximum load at all times, driving times are shortened. Thereby, the storage system is operated more efficiently, and fewer shuttles are required in the system. Thereby, the cost for the system is also lowered. Both since fewer shuttles need to be purchased, and thus the maintenance cost is lowered.

At least one recess may be provided in a lower side of the at least one goods supporting platform facing towards the shuttle, wherein each recess is configured to house one of said at least one load cells. This configuration is advantageous in that the goods supporting platform rests on the at least one load cell, which thus is able to detect and register all weight of the goods arranged on the at least one goods supporting platform. No other parts of the shuttle carry any of the weight of the goods. The at least one recess enables the goods supporting platform(s) to be stably arranged on top of the at least one load cell without influence from any other parts of the shuttle.

The shuttle may further comprise a control unit configured to be in connection with the motor and the at least one load cell. The control unit is configured to control the motor in accordance with the registered weight of the goods arranged on the at least one goods supporting platform. It is advantageous to use a control unit for the operation and control of the shuttle.

In one embodiment, the control unit is configured to control the motor such that the relation between the weight of the goods and the velocity of the shuttle is one of a linear function, a step function, a quadratic function, a logarithmic function or any other suitable function. The type of function is determined based on the circumstances in the current storage system. Different types of goods handled may require different control functions with for example faster or slower acceleration and/or deceleration phases or lower top speed.

In one embodiment, the shuttle further comprises wheels made of a high friction material configured to apply friction against an underlying surface. This provides better grip against the rails and allows the shuttle to accelerate faster and keep a higher top speed without losing the grip against the rail surface.

The shuttle may further comprise at least one sensor for detecting an end portion of rails of the rack storage system, on which rails the shuttle is configured to operate. By using a sensor on the shuttle, the approaching end of the rails is detectable, and the shuttle can be configured to brake and stop in time, independent of the load carried by the shuttle.

In one embodiment, the at least one goods supporting platform is configured to be movable between a raised, goods carrying position and a lowered, transport position. When the at least one goods supporting platform is in the lowered transport position, the velocity of the shuttle may be configured to be 2.0-3.0 m/s, preferably 2.2-2.6 m/s, and most preferred 2.4 m/s. This has shown to be advantageous velocity intervals for an empty shuttle.

When the shuttle carries its maximum weight, the maximum velocity of the shuttle may be configured to be 0.05-0.5 m/s, preferably 0.1-0.4 m/s, and most preferred 0.3 m/s. This has shown to be advantageous velocity intervals for a shuttle carrying maximum load.

When the at least one goods supporting platform is in the raised goods carrying position and carrying goods, the velocity of the shuttle may be configured to be adapted according to the weight of the goods arranged on the at least one goods supporting platform. This is advantageous in that an unloaded shuttle may be configured to drive faster compared to a loaded shuttle, and a shuttle with a light load may drive faster than a shuttle with a heavy load, which requires a longer braking distance.

In a second aspect, a rack storage system is provided. The rack storage system has at least one pair of elongated rails arranged in parallel, and a shuttle movably arranged on said pair of rails. This is an advantageous storage system since the transportation of shuttles and goods on shuttles require less time compared to conventional storage systems without any correlation between the goods carried and the velocity of the shuttles.

The rack storage system may comprise a plurality of storage positions distributed in rows in a horizontal plane and may comprise a plurality of such rows of storage positions distributed in a plurality of horizontal planes. One of the at least one pair of rails may be arranged below each of said rows of storage positions. This is an advantageous way of constructing a storage system. The rails are advantageous in that the shuttles may operate along them, and the position of the rails below the storage locations is advantageous in that a shuttle may pass below goods already arranged in a storage location.

In a third aspect, a method for operating a shuttle in a rack storage system comprising at least one row of storage positions is provided. The method comprises the steps of:
a) arranging a piece of goods on an at least one goods supporting platform of the shuttle;
b) registering, by means of at least one load cell arranged below the at least one goods supporting platform, the weight of the goods;
c) determining, by means of the registered weight, at least one of an acceleration value, a maximum velocity value, and a deceleration value for the shuttle carrying said goods;
c) controlling the shuttle to at least one of:
   - accelerate along a pair of rails of the rack storage system in accordance with the determined acceleration value;
   - operate along the rails by the determined maximum velocity value; and
   - decelerate in accordance with the determined deceleration value.

This method of operating a shuttle is advantageous in that one or more of the acceleration, deceleration and top speed of the shuttle are controllable in order to adapt the movement and control the operation of the shuttle depending on the load carried by it. This results e.g. in shorter braking distance for a shuttle carrying lighter goods, and higher velocity for a shuttle not carrying any goods.

The method may further comprise, before the step of controlling the shuttle to decelerate, a step of detecting when the shuttle is approaching an end portion of the rails by means of at least one sensor provided on the shuttle. The at least one sensor may in one embodiment be a laser detector. By determining when the shuttle is located a certain distance from the end of the rails, a braking force can be applied to the wheels, which braking force is related to the weight of the carried goods.

In one embodiment, the at least one laser detector is configured to detect at least one stop plate arranged in the end portions of the rails. The stop plate is easily detectable, providing a reliable way of determining when the shuttle is approaching the end of the rails.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
- Fig. 1: is a schematic side view of a rack storage system according to one embodiment, wherein pallets with goods are arranged in storage positions and wherein a shuttle is illustrated on rails in a lifted position for transporting goods,
- Fig. 2: is a schematic side view according to Fig. 1, wherein the shuttle is illustrated in a lowered position below a pallet in a storage position,
- Fig. 3: is a schematic side view of a part of a storage system according to one embodiment, including a forklift transporting a pallet with goods to or from a shuttle,
- Fig. 4: is a schematic side view of the shuttle operating in the rack storage system,
- Fig. 5: is a schematic top view of the shuttle operating in the rack storage system,
- Fig. 6: is a schematic side view of the shuttle operating in the rack storage system,
- Fig. 7: is a schematic perspective view of the shuttle according to one embodiment seen from above,
- Fig. 8: is a schematic perspective view of the shuttle according to one embodiment seen from below,
- Fig. 9: is a schematic perspective view of a lift table of a shuttle according to one embodiment seen from below,
- Fig. 10: is a flowchart showing steps of a method used to control the operation of the shuttle, and
- Fig. 11: is a graph displaying a relation between load weight and shuttle velocity.

### DETAILED DESCRIPTION

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art. If nothing else is stated, different embodiments may be combined with each other.

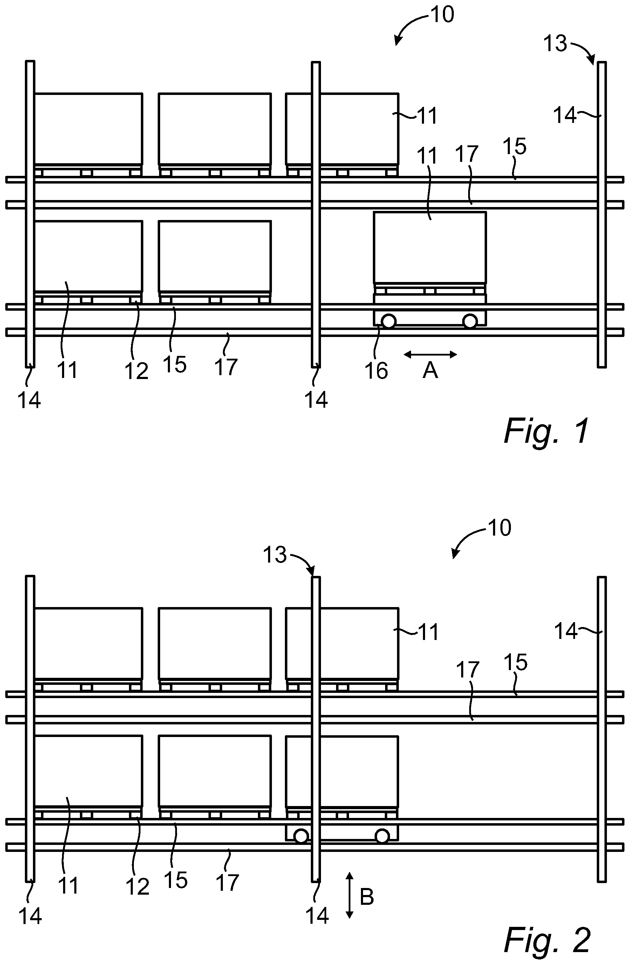

With reference to Figs 1-3, a storage system 10 or a part thereof is illustrated schematically according to one embodiment. The storage system 10 is arranged for storing goods 11 in storage positions of the storage system 10. For example, the storage system 10 is arranged for storing goods 11 arranged on pallets 12. For example, the storage system 10 comprises a rack storage system, such as a pallet rack 13, including a plurality of columns 14 and a plurality of beams 15 connected to the columns 14 to form the rack 13, wherein the beams 15 extend horizontally between the columns 14, so that the pallets 12 can be positioned on top of the beams 15. The beams 15 can be connected to the columns 14 in a variety of different ways, such as by means of screws, hooks, brackets, welding or similar. For example, the storage system 10 comprises a plurality of storage positions arranged in vertically displaced and parallel rows. According to one embodiment, the storage system 10 comprises a plurality of racks 13 separated by aisles along which a forklift can operate. For example, the storage system 10 comprises a so-called deep pallet racking, wherein a plurality of storage positions for pallets 12 are arranged in a row extending perpendicular from a front side of the rack 13, such as perpendicular to an aisle or similar forklift driving area.

The storage system 10 comprises at least one shuttle 16 for transporting the pallets 12 and any goods 11 arranged thereon to and from a desired storage position of the storage system 10. The shuttle 16 is arranged for transporting the pallet 12 between the front side of the rack 13 and the storage position, which is illustrated by means of the arrow A in Fig. 1. The shuttle 16 is movable on a pair of rails 17 of the storage system 10. The rails 17 are arranged below a row of storage positions and, e.g. below the beams 15 for carrying the pallets 12. For example, the rails 17 are arranged in parallel to the beams 15. Hence, the rails 17 extend perpendicular to a front side of the rack 13 and perpendicular to the aisle or similar if applicable. The shuttle 16 is movable along the rails 17 substantially between an end of the rails at the front side of the rack 13 and the innermost storage position. Alternatively, the shuttle 16 is movable along the rails 17 between opposite ends of the rails 17 and thus between two opposite faces of the rack 13.

A portion, preferably a top portion, of the shuttle 16 is movable, by means of a lifting mechanism, between a lifted position for transporting the pallet 12 along the rails 17 and along the beams 15 to and from the storage position, as illustrated in Fig. 1, and a lowered position for lowering the pallet 12 onto the beams 15 and for allowing the shuttle 16 to move below the pallet 12, as illustrated in Fig. 2. Hence, the portion of the shuttle 16 is movable substantially vertically between the lifted and lowered positions, which is illustrated by means of the arrow B in Fig. 2.

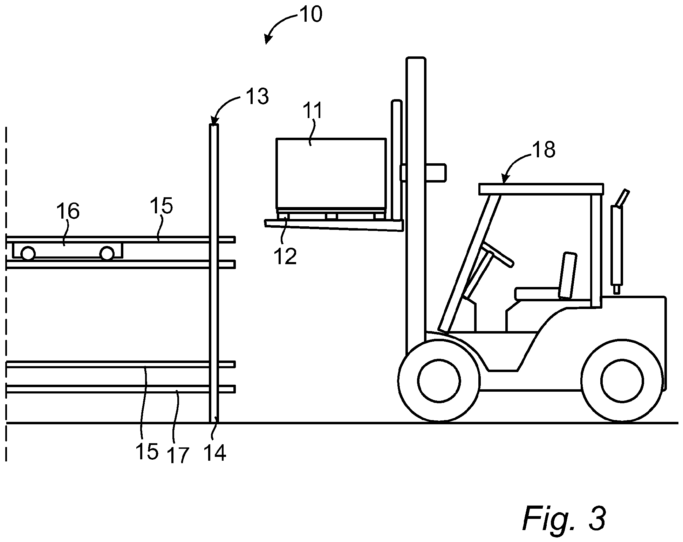

With reference to Fig. 3, the storage system 10 comprises a vehicle 18 for transporting goods 11 to and from the rack 13. For example, the vehicle is a forklift 18 or similar vehicle for transporting the pallets 12 with the goods 11 arranged thereon. For example, the forklift 18 is also arranged for transporting the shuttle 16 between rows of storage positions and between different racks 13 of the storage system 10. For example, the forklift 18 is a conventional forklift suitable for transporting pallets 12. The shuttle 16 is arranged for transporting the pallet 12 with goods 11 from the storage position in the rack 13 to a front side or a face of the rack 13, so that the pallet 12 can be reached by the forklift 18 for further transport. Then, the forklift 18 is arranged for lifting the pallet 12 off the shuttle 16. For example, the forklift 18 is also arranged for lifting the shuttle 16 off the rails 17 for transporting the shuttle 16. Similarly, the shuttle 16 is arranged for receiving the pallet 12 with the goods 11 thereon from the forklift 18, wherein the shuttle 16 transports the pallet 12 with goods 11 from the front side or face of the rack 13 and along the rails 17, in the lifted position of the shuttle 16, to the storage position in the rack 13, in which storage position the pallet 12 is lowered onto the beams 15 of the rack 13 to put the pallet 12 down and to disengage the shuttle 16 from the pallet 12.

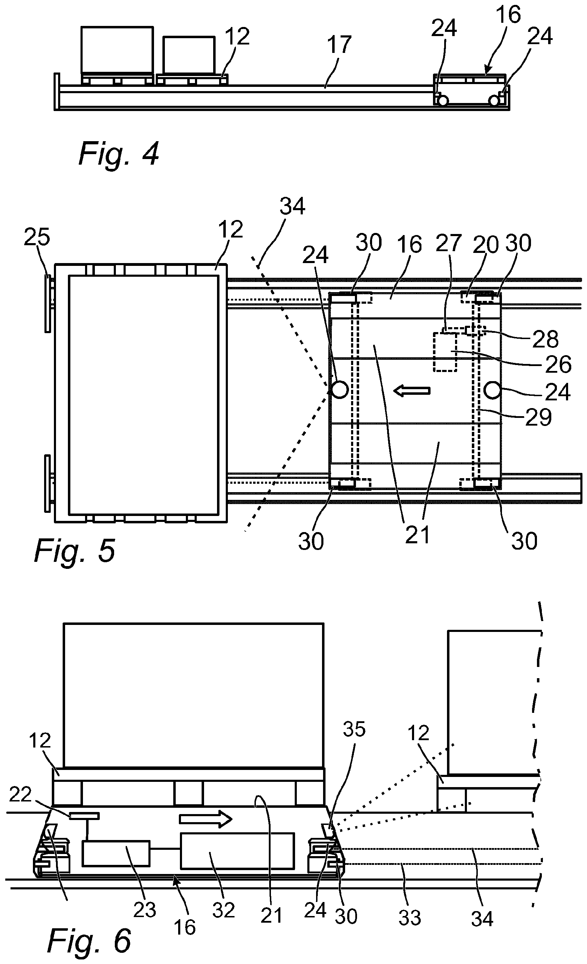

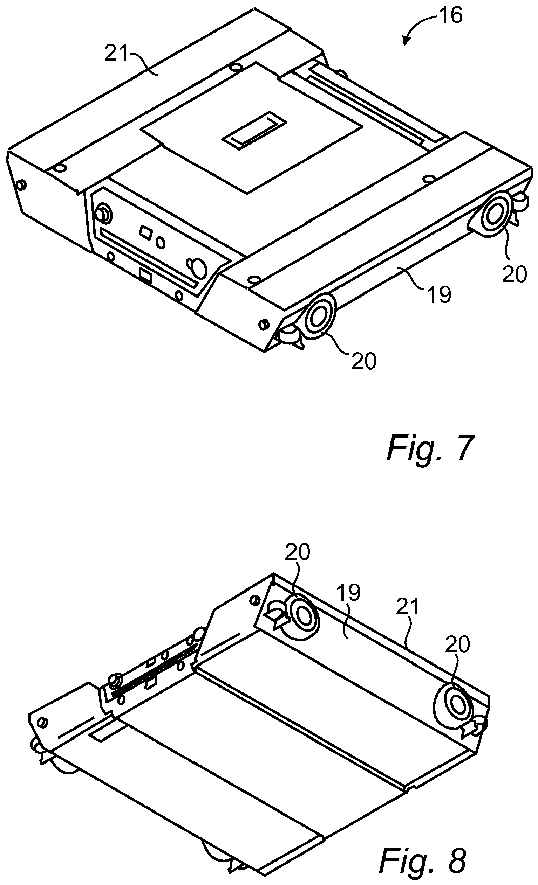

With reference to Figs 4-9 the shuttle 16 is illustrated according to one embodiment. The shuttle 16 comprises a chassis 19, wheels 20 and one or more goods supporting platforms 21. In the illustrated embodiment, the shuttle 16 comprises four wheels 20, two on each side of the shuttle 16, which sides extend in a direction of travel of the shuttle 16 and are to be arranged along the rails 17. The wheels 20 are preferably made of a high friction material. By using high friction material in the wheels 20, the shuttle 16 is able to accelerate faster and maintain a higher velocity. This is described in more detail below.

For example, the shuttle 16 comprises one platform 21, which is lifted and lowered in its entirety. Alternatively, the shuttle 16 comprises two platforms 21, such as a left-hand platform and a right-hand platform extending in the direction of travel between a back and a front of the shuttle 16.

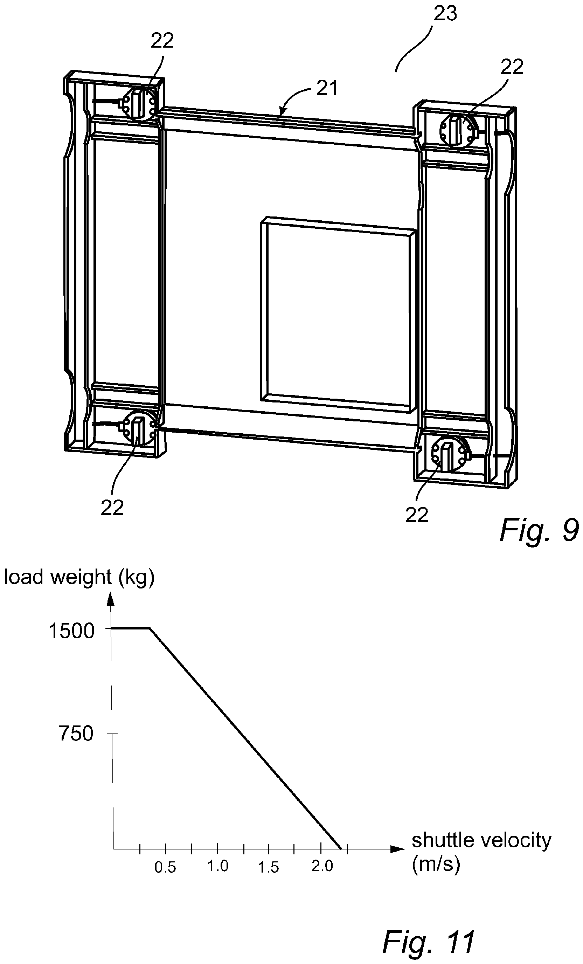

As shown in Fig. 9, load cells 22 are provided on a bottom side of the goods supporting platform 21. The goods support platform of the shuttle 16 is provided with four load cells 22, preferably one load cell 22 in each corner area of the platform 21. The goods supporting platform(s) 21 is arranged to rest on the load cells 22 such that the weight of any load arranged on the platform 21 is registered by the load cells 22.

In an embodiment where two goods supporting platforms 21 are provided, they rest on two load cells 22 respectively, one in the front and one in the back of each platform 21. In an embodiment where one single goods supporting platform is provided, one load cell 22 is arranged in each corner of the goods supporting platform 21. Alternatively, one goods supporting platform arranged on two, three or four or more load cells.

The goods supporting platform(s) 21 is provided with recesses on a side facing the shuttle 16. Each recess is configured to house a load cell 22. The recesses are shaped such that the load cell snugly fits therein, preferably, each recess is shaped to house the load cell in a form-fitting manner. The goods supporting platform 21 completely rests on the load cells 22. Thereby, all weight carried by the goods supporting platform 21 is registered by the load cells 22.

The shuttle 16 also comprises a motor 26, such as an electric motor, for propelling the shuttle 16 by rotating one or more of the wheels 20. Said motor 26 for propelling the shuttle 16 is, e.g., connected to a power source 32, such as a set of chargeable batteries. The set of batteries 32 are arranged inside the chassis 19 below the goods supporting platforms 21. The motor 26 is provided with a transmission 27 connected to a gear wheel 28 of a shaft 29 on which wheels 20 are arranged. The motor 26 with transmission 27 is operatively connected to a control unit, or CPU, 23 for receiving signals relating to speed control and direction of movement of the shuttle 16. The control unit 23 is configured to control the motor 26, and thereby the propelling of the shuttle 16. The control unit 23 is further connected to the load cells 22.

In various embodiments, shown in Fig. 5, the shuttle 16 is provided with detectors 24 in a middle section of the front and back edges of the shuttle 16. In the described embodiment, the detectors are laser scanners 24. In other embodiments, any other suitable type of scanner or sensor may be utilized. Normally, only one scanner 24 is in operation based on the direction the shuttle 16 is moving in. The laser scanners 24 generate a laser beam 34 at a wide angle in a horizontal plane. Any objects within the laser beam will cause a reflection that is received and processed in the laser scanner 24 and in the control unit 23 of shuttle 16. Such laser scanners 24 are commercially available, such as UAM-05LP from HOKUYO.

In various embodiments, the shuttle 16 is provided with laser detectors 30 at corner sections. Laser detectors 30 are used mainly to detect obstacles in front of shuttle 16 in connection with a final positioning of shuttle 16 at an end section of the rails 17 and close to a pallet 12 already in position on the rail 17. The end portions of the rails 17 can be indicated by a stop plate 25 or a similar object that is detectable by laser detectors 30.

In the embodiment shown in Fig. 6, the laser scanners 24 and the laser detectors 30 operate at different vertical levels and emit laser beam 34 and laser beam 33, respectively, at different vertical levels. Proximity detectors 35 such as ultrasound detectors are provided in corners of the shuttle 16 for detecting pallets 12 and goods on pallets 12 above the rails 17. The proximity detectors 35 are normally in operation only in the direction of movement of the shuttle 16 and if the lifting mechanism of the shuttle 16 is in a raised position.

When goods 11 is arranged 100 on the goods supporting platform 21 of the shuttle 16, the load cells 22 are configured to measure or register 101 the weight of the goods 11. The registered weight of the goods 11 is transmitted as a signal from the load cells 22 to the control unit 23. The control unit 23 is configured to determine 102, with the registered weight of the goods 11 as input value, one or more of an acceleration value, a maximum velocity value, and a deceleration value. These values are determined in order to provide a possibility of adapting one or more of the acceleration, deceleration and the maximum velocity of the shuttle 16 in accordance with the weight of the goods 11 arranged on the shuttle 16.

Thus, the control unit 23 is configured to control 103 the shuttle 16 to accelerate in accordance with the determined 102 acceleration value until the determined 102 maximum velocity is reached. Then, the shuttle 16 is controlled 104 to operate along the rails 17 by the determined 102 maximum velocity.

When the end portion of the rails 17 is detected 105, e.g. by means of stop plate 25, the control unit 23 is configured to control 106 the shuttle 16 to decelerate according to the determined 102 deceleration value such that the shuttle 16 is brought to a stop before the rail 17 ends. The deceleration is accomplished by applying a braking force to the wheels 20 of the shuttle 16.

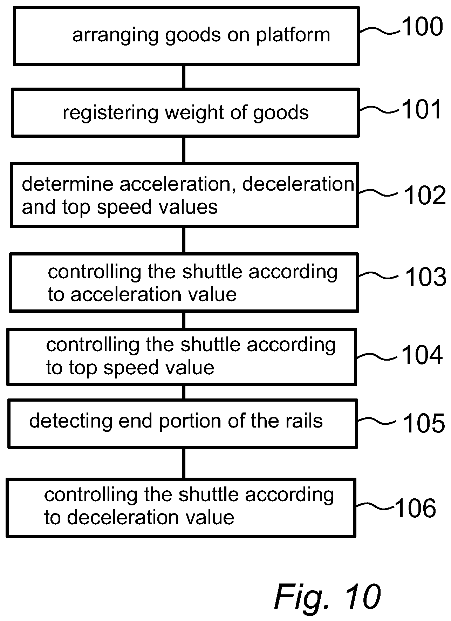

The method, shown in Fig. 10, of controlling the operation of the shuttle 16 is summarized according to the following:
a) arranging 100 goods 11 on the at least one goods supporting platform 21;
b) measuring/registering 101, by means of the load cells 22 of the shuttle 16, the weight of the goods 11;
c) determining 102, by means of the registered weight, at least one of an acceleration value, a top velocity value, and a deceleration value for the load carrying shuttle 16;
d) controlling 103 the shuttle 16 to accelerate in accordance with the determined acceleration value until the determined top velocity value is reached;
e) controlling 104 the shuttle 16 to operate by the determined maximum velocity;
f) detecting 105, by means of the laser detectors 30 provided on the shuttle 16, when the shuttle 16 is approaching the end portion of the rails 17;
g) controlling 106 the shuttle 16 to decelerate in accordance with the determined deceleration value such that the shuttle 16 is brought to a stop before the rail 17 ends.

The control unit 23 is further configured to control the motor 26 of the shuttle 16 in accordance with the determined acceleration/deceleration and maximum velocity values. Thus, the velocity of the shuttle 16 is adaptable according to the weight of the goods 11 carried by the shuttle 16. The top speed, or maximum velocity, of the shuttle 16 is configured to be higher when the load is lighter and lower for a heavier load. The shuttle is configured to operate by the highest maximum velocity when no load is carried.

When the goods supporting platform 21 is lowered, i.e. the shuttle 16 is not carrying any load, the maximum velocity of the shuttle 16 is 2.0-3.0 m/s, preferably 2.2-2.6 m/s, and most preferred 2.4 m/s.

When the goods supporting platform 21 is raised, i.e. the shuttle 16 is carrying goods 11, the maximum velocity is adapted according to the weight of the carried goods 11. In the shown embodiment of Fig. 11, the relation between the weight of the loaded goods 11 and the velocity of the shuttle 16 is a linear function. In this embodiment, the maximum weight of the load carried by the shuttle 16 is 1500 kg. The maximum velocity of the shuttle 16 carrying this maximum weight is 0.05-0.5 m/s, preferably 0.1-0.4 m/s, and most preferred 0.3 m/s.

In alternative embodiments, the relation between the weight of the loaded goods 11 and the velocity of the shuttle 16 may be a quadratic function, a step function, a logarithmic function or any other suitable function.

In order to improve the operation of the shuttle 16, the acceleration of the shuttle is adapted to the weight of the carried goods 11. The shuttle 16 is configured to accelerate faster when a lighter load is carried and correspondingly, the shuttle 16 is configured to accelerate slower when a heavier load is carried. The acceleration is thus dependent on the weight of the carried goods 11.

When the shuttle 16 is operating in the storage system 10, it is configured to accelerate according to the weight of the carried load in order to reach its maximum velocity. The acceleration value is preferably determined by a linear curve relating the acceleration to the weight of the carried goods 11. In alternative embodiments, the relation between the weight of the loaded goods 11 and the acceleration value for the shuttle 16 may be a quadratic function, a step function, a logarithmic function or any other suitable function.

When the shuttle 16 approaches the end portion of the rail 17, it is configured to adapt the deceleration in a corresponding manner compared to the acceleration phase. Thus, the heavier the load carried, the greater is the applied braking force. Similarly, if the load is lighter, the braking force may be smaller in order to bring the shuttle 16 to a stop before the rail 17 ends. The deceleration, and thus also the braking force is dependent on the weight of the load carried. This means that the shuttle 16 is controlled not to always to apply the maximum braking force, which means that it is configured to keep a higher velocity for a longer time when approaching the end portion of the rail 17. This results in faster transfer times of the shuttle 16, which in turn results in a more efficiently operated storage system 10.

A faster acceleration results in that the maximum velocity is reached faster. Correspondingly, a higher maximum velocity results in a shorter transfer time of the shuttle 16. Since every shuttle 16 of the storage system 10 operates faster, compared to shuttles applying maximum braking force at every deceleration event and/or having lower acceleration and/or lower maximum velocity, fewer shuttles are required in the system 10. Thus, an equally large storage system 10 may be equipped with fewer shuttles 16, resulting in a cheaper system 10. There is both a lower installation cost, since fewer shuttles 16 are needed, and also a lower operational cost, since fewer shuttles results in less service and maintenance costs. The improved operation of the shuttle 16 also results in a more efficient storage system where goods 11 can be transferred into and out of the system 10 faster and more efficiently due to the optimized acceleration and/or deceleration and/or adapted maximum speed of the shuttle 16.

The maximum velocity of the shuttle 16 may be adapter to different types of goods 11. For example, if the shuttle 16 is configured to handle delicate goods, the maximum velocity may be lower than the previously mentioned preferred velocity. The deceleration force applied may also be lowered in order not to damage the goods 11.

## Claims

1. A shuttle (16) for delivering and retrieving goods (11) to and from a storage position in a rack storage system (10), the shuttle (16) comprising a motor (26) for driving said shuttle (16), at least one vertically displaceable goods supporting platform (21), and at least one load cell (22) arranged below the at least one goods supporting platform (21) such that the at least one goods supporting platform (21) rests on said at least one load cell (22), wherein said at least one load cell (22) is configured to register the weight of goods (11) arranged on said platform (21), and wherein the shuttle (16) is configured to adapt its velocity in accordance with the registered weight.

2. The shuttle according to claim 1, wherein at least one recess is provided in a lower side of the at least one goods supporting platform (21) facing towards the shuttle (16), wherein each recess is configured to house one of said at least one load cells (22).

3. The shuttle according to claims 1 or 2, further comprising a control unit (23) configured to be in connection with the motor (26) and the at least one load cell (22), the control unit (23) being configured to control the motor (26) in accordance with the registered weight of the goods (11) arranged on the at least one goods supporting platform (21).

4. The shuttle according to claim 3, wherein the control unit (23) is configured to control the motor (26) such that the relation between the weight of the goods (11) and the velocity of the shuttle (16) is one of a linear function, a step function, a quadratic function, a logarithmic function or any other suitable function.

5. The shuttle according to any one of the preceding claims, further comprising wheels (20) made of a high friction material configured to apply friction against an underlying surface (17).

6. The shuttle according to any one of the preceding claims, further comprising at least one sensor (30) for detecting an end portion of rails (17) of the rack storage system (10), on which rails (17) the shuttle (16) is configured to operate.

7. The shuttle according to any one of the preceding claims, wherein the at least one goods supporting platform (21) is configured to be movable between a raised, goods carrying position and a lowered, transport position, wherein when the at least one goods supporting platform (21) is in the lowered transport position, the velocity of the shuttle (16) is configured to be 2.0-3.0 m/s, preferably 2.2-2.6 m/s, and most preferred 2.4 m/s.

8. The shuttle according to any one of the preceding claims, wherein when the shuttle (16) carries its maximum weight, the maximum velocity of the shuttle (16) is configured to be 0.05-0.5 m/s, preferably 0.1-0.4 m/s, and most preferred 0.3 m/s.

9. The shuttle according to claim 7, wherein when the at least one goods supporting platform (21) is in the raised goods carrying position and carrying goods (11), the velocity of the shuttle (16) is configured to be adapted according to the weight of the goods (11) arranged on the at least one goods supporting platform (21).

10. A rack storage system (10) having at least one pair of elongated rails (17) arranged in parallel, and a shuttle (16) according to any of the preceding claims movably arranged on said pair of rails (17).

11. The rack storage system according to claim 10, comprising a plurality of storage positions distributed in rows in a horizontal plane, and comprising a plurality of such rows of storage positions distributed in a plurality of horizontal planes, wherein one of said at least one pair of rails (17) is arranged below each of said rows of storage positions.

12. A method for operating a shuttle (16) in a rack storage system (10) comprising at least one row of storage positions, the method comprising the steps of:
a) arranging (100) a piece of goods (11) on an at least one goods supporting platform (21) of the shuttle (16);
b) registering (101), by means of at least one load cell (22) arranged below the at least one goods supporting platform (21), the weight of the goods (11);
c) determining (102), by means of the registered weight, at least one of an acceleration value, a maximum velocity value, and a deceleration value for the shuttle (16) carrying said goods (11);
c) controlling the shuttle (16) to at least one of:
- accelerate (103) along a pair of rails (17) of the rack storage system (10) in accordance with the determined acceleration value;
- operate (104) along the rails (17) by the determined maximum velocity value; and
- decelerate (106) in accordance with the determined deceleration value.

13. The method according to claim 12, further comprising, before the step of controlling the shuttle to decelerate (106), a step of detecting (105) when the shuttle (16) is approaching an end portion of the rails (17) by means of at least one sensor (30) provided on the shuttle (16), the at least one sensor preferably being a laser detector (30).

14. The method according to claim 13, wherein the at least one laser detector (30) is configured to detect at least one stop plate (25) arranged in the end portions of the rails (17).
